(19) Europäisches Patentamt
European Patent Office
Office européen des brevets

(11) **EP 3 845 489 A1**

(12) **EUROPEAN PATENT APPLICATION**
published in accordance with Art. 153(4) EPC

(43) Date of publication:
**07.07.2021  Bulletin 2021/27**

(21) Application number: **19854016.3**

(22) Date of filing: **26.08.2019**

(51) Int Cl.:
*C01B 32/342* [(2017.01)]    *C01B 32/182* [(2017.01)]
*C01B 32/21* [(2017.01)]    *H01G 11/36* [(2013.01)]
*H01M 4/587* [(2010.01)]    *H01M 4/62* [(2006.01)]

(86) International application number:
**PCT/JP2019/033241**

(87) International publication number:
**WO 2020/045337 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **28.08.2018  JP 2018159022**

(71) Applicant: **SEKISUI CHEMICAL CO., LTD.
Osaka-shi
Osaka
530-8565 (JP)**

(72) Inventors:
• **SASAGAWA, Naoki
Mishima-gun, Osaka 618-0021 (JP)**
• **WADA, Takuya
Mishima-gun, Osaka 618-0021 (JP)**

(74) Representative: **Ter Meer Steinmeister & Partner
Patentanwälte mbB
Nymphenburger Straße 4
80335 München (DE)**

(54) **CARBON MATERIAL AND PRODUCTION METHOD THEREFOR, ELECTRODE MATERIAL FOR POWER STORAGE DEVICE, AND POWER STORAGE DEVICE**

(57)    Provided is a carbon material, which can increase the capacitance in an electrical storage device. Provided is a carbon material including a carbon material that has a graphene laminated structure, where the carbon material has a BET specific surface area of 240 $m^2$/g or more, and has a powder density of 0.5 g/cc or more when 0.1 g of the carbon material is put in a container with a cross-sectional area of 3.14 $cm^2$ and compressed at a pressure of 16 kN.

EP 3 845 489 A1

## Description

### TECHNICAL FIELD

The present invention relates to a carbon material, a method for producing the carbon material, and an electrode material for an electrical storage device and an electrical storage device with the carbon material used.

### BACKGROUND ART

In recent years, electrical storage devices have been actively researched and developed for mobile devices, hybrid vehicles, electric vehicles, household electrical storage applications, and the like. Carbon materials such as graphite, activated carbon, carbon nanofibers, and carbon nanotubes are widely used as electrode materials for electrical storage devices from the environmental aspect.

Patent Document 1 below discloses an electric double layer capacitor with activated carbon used as an electrode material. In the method for producing activated carbon in Patent Document 1, first, a graphitizable carbon precursor is oxidized to obtain an oxidized product. Subsequently, the oxidized product obtained is subjected to a heat treatment under a catalytic influence for the dehydration reaction to obtain a dehydrated product. Finally, the dehydrated product is subjected to gas activation to obtain activated carbon. Patent Document 1 mentions acicular raw coke, bulk mesophase, crystalline pitch, mesocarbon macrobead mesophase pitch spun raw fiber, and the like as graphitizable carbon precursors.

Further, Patent Document 2 below discloses, a capacitor electrode material that has a structure with graphite partially exfoliated and includes a resin-remaining partially exfoliated graphite with a resin remaining partially and a binder resin. In Patent Document 2, the resin-remaining partially exfoliated graphite is obtained by thermally decomposing the resin in a composition in which the resin is fixed to graphite or primary exfoliated graphite by grafting or adsorption.

### Related Art Document

### Patent Document

Patent Document 1: JP 2005-347517 A
Patent Document 2: International Publication No. 2015/098758

### SUMMARY OF THE INVENTION

### PROBLEMS TO BE SOLVED BY THE INVENTION

In recent years, further increased capacities have been required in the field of electrical storage devices such as capacitors and lithium ion secondary batteries. The activated carbon described in Patent Document 1 has, however, low conductivity, and moreover has a problem with capacitance in an electrical storage device when the activated carbon is used for the electrode of the electrical storage device. Further, when the carbon material in Patent Document 2 is used for the electrode of an electrical storage device, the capacitance in the electrical storage device fails to be sufficiently increased.

An object of the present invention is to provide a carbon material, a method for producing the carbon material, and an electrode material for an electrical storage device and an electrical storage device with the carbon material used, which can increase the capacitance of the electrical storage device.

### MEANS FOR SOLVING THE PROBLEMS

A carbon material according to the present invention is a carbon material including a carbon material that has a graphene laminated structure, the BET specific surface area of the carbon material is 240 $m^2$/g or more, and when 0.1 g of the carbon material is put in a container with a cross-sectional area of 3.14 $cm^2$ and compressed at a pressure of 16 kN, the powder density is 0.5 g/cc or more.

In a specific aspect of the carbon material according to the present invention, the carbon material has a BET specific surface area of 450 $m^2$/g or more.

In yet another specific aspect of the carbon material according to the present invention, the carbon material has a mesopore volume of 0.04 mL/g or more measured in accordance with a BJH method.

In yet another specific aspect of the carbon material according to the present invention, the carbon material has a micropore volume of 0.20 mL/g or more measured in accordance with an MP method.

In yet another specific aspect of the carbon material according to the present invention, X/Y meets 0.3 < X/Y < 4, where the micropore volume of the carbon material, measured in accordance with the MP method, is expressed by X mL/g and the mesopore volume of the carbon material, measured in accordance with the BJH method, is expressed by Y mL/g.

In yet another specific aspect of the carbon material according to the present invention, the carbon material that has the graphene laminated structure is graphite or exfoliated graphite. Preferably, the graphite or exfoliated graphite is partially exfoliated graphite in which graphite is partially exfoliated.

In yet another specific aspect of the carbon material according to the present invention, the carbon material further contains a carbide of a resin. Preferably, the content of the resin carbide in the carbon material is 1% by weight or more and 99.9% by weight or less.

In yet another specific aspect of the carbon material according to the present invention, the resin carbide contains an aromatic ring.

A method for producing a carbon material according to the present invention is a method for producing the carbon material configured according to the present invention, which includes a mixing step of mixing graphite or primary exfoliated graphite with a resin, a step of further mixing an activator to obtain a mixture in the mixing step or after the mixing step, and a step of subjecting the mixture to an activation treatment.

In a specific aspect of the method for producing a carbon material according to the present invention, in the mixing step, the composition including the graphite or the primary exfoliated graphite and the resin is heated at a temperature of 200°C to 500°C.

In another specific aspect of the method for producing a carbon material according to the present invention, in the mixing step, the mixture including the graphite or the primary exfoliated graphite, the resin, and the activator is heated at a temperature of 200°C to 500°C.

In yet another specific aspect of the method for producing a carbon material according to the present invention, the resin is a resin having an aromatic ring. Preferably, the resin having an aromatic ring contains an aromatic polyester resin.

In yet another specific aspect of the method for producing a carbon material according to the present invention, the resin having an aromatic ring is a reaction product of a compound having a hydroxyl group and a compound having a carboxyl group. Preferably, the compound having a hydroxyl group is a polyhydric alcohol or an aromatic polyhydric alcohol. More preferably, the compound having a hydroxyl group is a polyhydric alcohol. Preferably, the compound having a carboxyl is a polycarboxylic acid or an aromatic polycarboxylic acid derivative. More preferably, the compound having a carboxyl is an aromatic polycarboxylic acid derivative.

An electrode material for an electrical storage device according to the present invention contains a carbon material configured according to the present invention.

An electrical storage device according to the present invention includes an electrode made from the electrode material for an electrical storage device configured according to the present invention.

## EFFECT OF THE INVENTION

The present invention can provide a carbon material, a method for producing the carbon material, and an electrode material for an electrical storage device and an electrical storage device with the carbon material used, which can increase the capacitance in electrical storage devices.

## MODE FOR CARRYING OUT THE INVENTION

Hereinafter, the details of the present invention will be described.

(Carbon material)

The carbon material according to the present invention includes a carbon material that has a graphene laminated structure. The BET specific surface area of the carbon material according to the present invention is 240 $m^2$/g or more. Further, when 0.1 g of the carbon material according to the present invention is put in a container with a cross-sectional area of 3.14 $cm^2$ and compressed at a pressure of 16 kN, the powder density is 0.5 g/cc or more. More specifically, the powder density can be measured with the use of, for example, a powder resistance measurement device (manufactured by Mitsubishi Chemical Analytech Co., Ltd., product number "MCP-T700/PD51"). In this method, 0.1 g of the carbon material powder is weighed, put in a container with a cross-sectional area of 3.14 $cm^2$, compressed by applying pressure up to 16 kN with a hydraulic pump, while the thickness is measured. The density calculated in that case can be regarded as the powder density. It is to be noted that the cross-sectional area is the area of a cross section orthogonal to the depth direction of the container, and for example, when the planar shape is substantially circular, a container of 20 mm$\varphi$ in diameter can be used.

In the present invention, the BET specific surface area of the carbon material is equal to or more than the lower limit mentioned above and the powder density is equal to or more than the lower limit mentioned above, thereby allowing the capacitance to be increased when the carbon material is used for an electrical storage device.

In general, in order to improve the BET specific surface area of a carbon material, for example, it is conceivable to form a porous structure. On the other hand, there is a trade-off relation of decreasing the density of the material is as the structure becomes more porous because of the increased voids in the material. According to the present invention, as described later, the both physical properties can be achieved at high levels by precisely controlling the sizes and proportion of pores, and as a result, the capacitance of an electrical storage device can be increased.

In the present invention, the BET specific surface area of the carbon material is preferably 450 $m^2/g$ or more, more preferably 800 $m^2/g$ or more, further preferably 1100 $m^2/g$ or more, and preferably 4000 $m^2/g$ or less, more preferably 3500 $m^2/g$ or less, further preferably 3000 $m^2/g$ or less. When the BET specific surface area of the carbon material falls within the range mentioned above, the capacitance of the electrical storage device can be further increased.

It is to be noted that in this specification, the BET specific surface area refers to the specific surface area calculated from analysis the adsorption isotherm obtained from measurement of the adsorption amount of nitrogen ($N_2$) by the BET method. The BET specific surface area can be calculated from measurement of an adsorption isotherm with the use of, for example, a high-precision gas adsorption measurement device (from MicrotracBEL Corp., product number "BELSORP-MAX", nitrogen gas, multi-point measurement from 50 to 100 points at $1.0 \times 10^{-6}$ < relative pressure $P/P_0$ < 0.99, and vacuum treatment at 300°C for 5 hours as a pretreatment condition). The BET specific surface area can be calculated through the BET method with analysis software (from MicrotracBEL Corp., software name "BELMaster") adopted for the thus obtained adsorption isotherm.

In the present invention, the powder density of the carbon material, measured by the method described above, is preferably 0.55 g/cc or more, more preferably 0.60g/cc or more. When the powder density of the carbon material is equal to or more than the lower limit mentioned above, the capacitance can be further increased. Further, the upper limit of the powder density of the carbon material is not particularly limited, but can be practically 2.0 g/cc.

In the present invention, the product of the BET specific surface area ($m^2/g$) and the powder density (g/cc) in the carbon material is preferably 500 or more, more preferably 630 or more, further preferably 650 or more. The upper limit of the product of the BET specific surface area ($m^2/g$) and the powder density (g/cc) in the carbon material is not particularly limited, but can be, for example, 2500.

The carbon material according to the present invention preferably has mesopores. It is to be noted that in this specification, a mesopore refers to a pore that is calculated by a BJH (Barret, Joyner, Hallender) method. The volume of the mesopores refers to the sum of the volumes of all of the mesopores in the carbon material (total mesopore volume), which can be measured, for example, from the adsorption isotherm obtained by measuring the gas adsorption amount of $N_2$.

In the present invention, the volume of the mesopores in the carbon material is preferably 0.04 mL/g or more, preferably 0.1 mL/g or more, further preferably 0.2 mL/g or more. The upper limit of the volume of the mesopores is not particularly limited, but is preferably 2.00 mL/g or less, more preferably 1.80 mL/g or less. When the volume of the mesopores is equal to or more than the lower limit mentioned above, an electrolytic solution is more likely to permeate the surface of the carbon material, the large specific surface area can be more effectively utilized, and the capacitance of the electrical storage device can be further increased. In contrast, when the volume of the mesopores is equal to or less than the upper limit mentioned above, the quantity of voids is appropriate, and the density of the material can be thus further prevented from being decreased.

Further, the carbon material according to the present invention preferably has micropores. It is to be noted that in this specification, a micropore refers to a pore that is calculated by a MP (micropore analysis) method. In addition, the volume of the micropores refers to the sum of the volumes of all of the micropores in the carbon material.

In the present invention, the volume of the micropores in the carbon material is preferably 0.15 mL/g or more, more preferably 0.20 mL/g or more, further preferably 0.30 mL/g or more. The upper limit of the volume of the micropores is not particularly limited, but is preferably 0.70 mL/g. When the volume of the micropores is equal to or more than the lower limit mentioned above, a large specific surface area can be achieved while suppressing a decrease in the density of the material, and the capacitance of the electrical storage device can be thus further increased. In contrast, when the volume of the micropores is equal to or less than the upper limit mentioned above, the specific surface area can be more effectively utilized with ions in an electrolytic solution diffused, and the capacitance can be thus further increased.

In the present invention, X/Y preferably meets 0.3 < X/Y < 4, where the volume of micropores in carbon material, measured in accordance with the MP method, is expressed by X mL/g, and the volume of mesopores in the carbon material, measured in accordance with the BJH method, is expressed by Y mL/g. When the X/Y falls within the range mentioned above, the capacitance of the electrical storage device can be further increased while keeping the density of the material high.

In the present invention, examples of the carbon material that has a graphene laminated structure include graphite and exfoliated graphite. Further, whether to have a graphene laminated structure or not can be confirmed by whether a peak around $2\theta$ = 26 degrees (derived from the graphene laminated structure) is observed or not when the X-ray diffraction spectrum of the carbon material is measured with the use of a $CuK\alpha$ line (wavelength: 1.541 Å). The X-ray diffraction spectrum can be measured by a wide-angle X-ray diffraction method. As the X-ray diffractometer, for example, SmartLab (from Rigaku Corporation) can be used.

The carbon material according to the present invention contains such a carbon material that has a graphene laminated structure, thus allowing the conductivity to be increased. Accordingly, the output characteristics of the electrical storage device can be enhanced.

Graphite is a laminate of a plurality of graphene sheets. The number of laminated graphene sheets of graphite is typically about 100,000 to 1,000,000. As the graphite, for example, natural graphite, artificial graphite, expanded graphite, or the like can be used. Expanded graphite has a higher proportion of increased interlayer distance between graphene layers than ordinary graphite. Accordingly, it is preferable to use expanded graphite as the graphite.

Exfoliated graphite, which is obtained by subjecting original graphite to a peeling treatment, refers to a graphene sheet laminate that is thinner than the original graphite. The number of laminated graphene sheets in exfoliated graphite has only to be smaller than that of the original graphite. It is to be noted that the exfoliated graphite may be oxidized exfoliated graphite.

For the exfoliated graphite, the number of graphene sheets laminated is not particularly limited, but is preferably 2 or more, more preferably 5 or more, and preferably 1000 or less, more preferably 500 or less. When the number of graphene sheets laminated is equal to or more than the lower limit mentioned above, the exfoliated graphite is kept from being scrolled in the liquid, and the exfoliated graphite is kept from being stacked on top of one another, and the conductivity of the exfoliated graphite can be thus further enhanced. When the number of graphene sheets laminated is equal to or less than the upper limit mentioned above, the specific surface area of the exfoliated graphite can be further increased.

Further, the exfoliated graphite is preferably partially exfoliated graphite in which graphite is partially exfoliated.

More specifically, the term "graphite being partially exfoliated" means that the graphene laminate has enlarged interlayer distance between the graphene layers from the end edge to the inside to some extent, that is, the graphite is partially exfoliated at the end edge (edge part). Further, the term means that the graphite layers are laminated in the central part in the same manner as the original graphite or the primary exfoliated graphite. Accordingly, the part where graphite is partially exfoliated at the end edge is continuous with the central part. Furthermore, the partially exfoliated graphite may include graphite peeled off and exfoliated at the end edge.

As described above, the partially exfoliated graphite has graphite layers laminated in the central part in the same manner as the original graphite or the primary exfoliated graphite. For that reason, the graphite has a higher degree of graphitization than conventional graphene oxides and carbon black, with excellent conductivity. Accordingly, when the graphite is used as an electrode for an electrical storage device, the electron conductivity in the electrode can be further increased, thereby allowing charge/discharge with a larger current.

Further, whether graphite is partially exfoliated or not can be determined by, for example, observation with a scanning electron microscope (SEM), or from an X-ray diffraction spectrum, as in the case of the exfoliated graphite-resin composite material described in International Publication No. 2014/034156.

The carbon material according to the present invention may be composed only of the carbon material that has a graphene laminated structure, but the carbon material according to the present invention may further contain a resin carbide or other carbon material. Above all, it is preferable to contain the above resin carbide. Further, the resin carbide preferably contains an aromatic ring.

The carbon material may also contain the original resin for the resin carbide. The original resin for the resin carbide preferably contains a resin having an aromatic ring. In this case, the capacitance can be further increased. The reason therefor is believed to because the aromatic ring moiety of the resin having an aromatic ring serves as a pore wall, thereby making it possible to further increase the density and the specific surface area.

The concentration of the aromatic ring moiety included in the resin having an aromatic ring is preferably 1% by weight or more and 40% by weight or less with respect to 100% by weight of the original resin of the resin carbide. Further, the original resin of the resin carbide may contain a resin having a heterocycle.

The resin having an aromatic ring preferably contains an aromatic polyester resin. Examples of the aromatic polyester resin can include a polyethylene terephthalate, an aromatic polyester polyol, an amorphous polyarylate, a liquid crystal polyester, and a polyoxybenzoyl.

Further, the resin having an aromatic ring preferably contains a compound having a hydroxyl group and a compound having a carboxyl group. The resin having an aromatic ring may be a reaction product of a compound having a hydroxyl group and a compound having a carboxyl group.

As the compound having a hydroxyl group, for example, a polyhydric alcohol or an aromatic polyhydric alcohol can be used. As the polyhydric alcohol, a polyethylene glycol, a polypropylene glycol, a polyvinyl alcohol, a polyglycerin, an ethylene glycol, a propylene glycol, a diethylene glycol, a glycerin, and the like can be used. As the aromatic polyhydric alcohol, for example, a hydroquinone, a catechol, a resorcinol, a benzenetriol, a dihydronaphthalene, and the like can be used.

Further, as the compound having a carboxyl group, for example, a polycarboxylic acid or an aromatic polycarboxylic acid derivative can be used. As the polycarboxylic acid, for example, a polyacrylic acid, a succinic acid, a fumaric acid, a maleic acid, an adipic acid, and the like can be used. As the aromatic polycarboxylic acid derivative, for example, a phthalic acid, an isophthalic acid, a terephthalic acid, a trimesic acid, a naphthalenecarboxylic acid, and the like, and acid halides thereof such as a phthaloyl chloride, an isophthalic acid dichloride, a terephthalic acid chloride, and the like can be used.

The combination of the compound having a hydroxyl group and the compound having a carboxyl group may contain at least one or more for each of the compounds, and an aromatic ring may be formed in the preparation process.

In the present invention, the content of the resin carbide contained in 100% by weight of the carbon material is preferably 1% by weight or more, more preferably 3% by weight or more, further preferably 10% by weight or more, particularly preferably 15% by weight or more, and preferably 99% by weight or less, more preferably 95% by weight or less. The content of the resin carbide falls within the range mentioned above, thereby allowing the battery characteristics of the electrical storage device to be further enhanced.

The other carbon material mentioned above is not particularly limited, and graphene, carbon nanotubes, carbon nanofibers, carbon black, activated carbon, and the like can be used.

It is to be noted that when the resin carbide or the original resin for the resin carbide, or the other carbon material is contained in addition to the carbon material that has a graphene laminated structure, the volumes of mesopores and micropores and the BET specific surface areas are determined for all of the carbon materials.

(Method for producing carbon material)

The carbon material according to the present invention can be obtained by subjecting a composite of a carbon material that has a graphene laminated structure and a resin and/or a resin carbide to, for example, an activation treatment.

More specifically, in the method for producing a carbon material according to the present invention, first, graphite or primary exfoliated graphite and a resin are mixed (mixing step). In addition, an activator is further mixed before or after the mixing step to obtain a mixture. Next, the mixture is subjected to an activation treatment, thereby allowing a carbon material to be obtained. It is to be noted that in the mixing step, a surfactant such as a carboxymethyl cellulose (CMC) may be further mixed with the graphite or primary exfoliated graphite and the resin.

Further, the mixing step may include, after mixing the graphite or primary exfoliated graphite and the resin, a heating step of heating the graphite or primary exfoliated graphite and the resin. When the carbon material that has a graphene laminated structure is the partially exfoliated graphite, the heating in this heating step may be heating for thermal decomposition in the production of the partially exfoliated graphite. In addition, when the carbon material that has a graphene laminated structure is partially exfoliated graphite, the resin mixed in the above mixing step may be a resin for use in the production of the partially exfoliated graphite. More specifically, the mixing step may be a step of producing partially exfoliated graphite.

The heating temperature in the heating step can be, for example, 200°C to 500°C. The heating may be performed in the atmosphere, or under an atmosphere of an inert gas such as a nitrogen gas. The activator may be mixed with the graphite or primary exfoliated graphite and the resin before heating step, and then be heated, or may be mixed after the heating step, that is, after heating the graphite or primary exfoliated graphite and the resin. It is to be noted that in the heating of the heating step or activation step (activation treatment), the resin may be partially carbonized, or the resin may be completely carbonized. Further, heating may be performed only in the activation step without heating in the mixing step.

The method for the activation treatment is not particularly limited, and examples thereof include a chemical activation method and a gas activation method. Above all, the alkali activation method is preferred from the viewpoint that the specific surface area of the obtained carbon material can be further effectively increased.

The activator for use in the alkali activation method is not particularly limited, and examples thereof include a sodium hydroxide, a potassium hydroxide, and a potassium carbonate. Above all, the activator is, when the activator forms a composite with a resin, preferably a potassium carbonate from the viewpoint that the specific surface area of the carbon material can be further effectively increased only at a high temperature during the activation treatment without affecting the resin for the composite at ordinary temperatures.

In the alkaline activation method, such an activator and the carbon material that has a graphene laminated structure are mixed, and subjected to the activation treatment. In this regard, the activator and the carbon material that has a graphene laminated structure, which are physically mixed, may be subjected to the activation treatment, or the carbon material that has a graphene laminated structure, which is impregnated with the activator, may subjected to the activation treatment. From the viewpoint that the specific surface area of the obtained carbon material can be further effectively increased, the carbon material that has a graphene laminated structure, which is impregnated with the activator, is preferably subjected to the activation treatment.

Further, the temperature for the activation treatment in the alkali activation method can be, for example, 600°C to 900°C. In addition, the holding time at the temperature can be, for example, 30 minutes to 300 minutes. When the holding time is equal to or less than the upper limit mentioned above, the density can be further increased without excessively forming many mesopores. In addition, when the holding time is equal to or more than the lower limit mentioned above, the formation of micropores is sufficient, thereby allowing the BET specific surface area to be further increased. Further, the activation treatment is preferably performed under an atmosphere of an inert gas such as a nitrogen gas or an argon gas.

The activator for use in the gas activation method is not particularly limited, and examples thereof include a phosphoric acid, a zinc chloride, carbon dioxide, water vapor, and a combustion gas.

Further, the temperature for the activation treatment in the gas activation method can be, for example, 600°C to 900°C. In addition, the holding time at the temperature can be, for example, 30 minutes to 300 minutes. When the holding time is equal to or less than the upper limit mentioned above, the density can be further increased without excessively forming many mesopores. In addition, when the holding time is equal to or more than the lower limit mentioned above, the formation of micropores is sufficient, thereby allowing the BET specific surface area to be further increased.

The resin mixed with the graphite or primary exfoliated graphite in the production process mentioned above is not particularly limited, and for example, the resin preferably contains a resin having an aromatic ring. In this case, the capacitance can be further increased. The reason therefor is believed to because the aromatic ring moiety of the resin having an aromatic ring serves as a pore wall, thereby making it possible to increase the density and the specific surface area.

In addition, the concentration of the aromatic ring moiety included in the resin having an aromatic ring is preferably 1% by weight or more and 40% by weight or less with respect to 100% by weight of the resin mixed with the graphite or primary exfoliated graphite. Further, the resin mixed with the graphite or primary exfoliated graphite may contain a resin having a heterocycle.

The resin having an aromatic ring preferably contains an aromatic polyester resin. Examples of the aromatic polyester resin can include a polyethylene terephthalate, an aromatic polyester polyol, an amorphous polyarylate, a liquid crystal polyester, and a polyoxybenzoyl.

Further, the resin having an aromatic ring preferably contains a compound having a hydroxyl group and a compound having a carboxyl group. The resin having an aromatic ring may be a reaction product of a compound having a hydroxyl group and a compound having a carboxyl group.

As the compound having a hydroxyl group, for example, a polyhydric alcohol or an aromatic polyhydric alcohol can be used. As the polyhydric alcohol, a polyethylene glycol, a polypropylene glycol, a polyvinyl alcohol, a polyglycerin, an ethylene glycol, a propylene glycol, a diethylene glycol, a glycerin, and the like can be used. As the aromatic polyhydric alcohol, for example, a hydroquinone, a catechol, a resorcinol, a benzenetriol, a dihydronaphthalene, and the like can be used.

Further, as the compound having a carboxyl group, for example, a polycarboxylic acid or an aromatic polycarboxylic acid derivative can be used. As the polycarboxylic acid, for example, a polyacrylic acid, a succinic acid, a fumaric acid, a maleic acid, an adipic acid, and the like can be used. As the aromatic polycarboxylic acid derivative, for example, a phthalic acid, an isophthalic acid, a terephthalic acid, a trimesic acid, a naphthalenecarboxylic acid, and the like, and acid halides thereof such as a phthaloyl chloride, an isophthalic acid dichloride, a terephthalic acid chloride, and the like can be used. From the viewpoint of further efficiently forming the pore wall, a dicarboxylic acid derivative having a bond at the para-position (p-position) is preferred, such as terephthalic acid.

The combination of the compound having a hydroxyl group and the compound having a carboxyl group may contain at least one or more for each compound, and an aromatic ring may be formed in the preparation process.

The resin mixed with the graphite or primary exfoliated graphite in the production process mentioned above may be completely carbonized or may partially remain as a resin in the carbonization/activation step.

When the carbon material according to the present invention is used for an electrode of an electrical storage device, the capacitance of the electrical storage device can be increased. Accordingly, the material can be suitably used as an electrode material for an electrical storage device.

(Electrode material for electrical storage device and electrical storage device)

The electrical storage device according to the present invention is not particularly limited, and examples thereof include a non-aqueous electrolyte primary battery, an aqueous electrolyte primary battery, a non-aqueous electrolyte secondary battery, an aqueous electrolyte secondary battery, a capacitor, an electric double layer capacitor, and a lithium ion capacitor. The electrode material for an electrical storage device according to the present invention is an electrode material for use in an electrode of such an electrical storage device as mentioned above.

The electrical storage device according to the present invention includes an electrode composed of the electrode material for an electrical storage device, containing the carbon material according to the present invention, thus increasing the capacitance.

In particular, the carbon material contained in the electrode material for an electrical storage device can, because of the specific surface area is large as mentioned above, effectively increase the capacitance of a capacitor or a lithium ion secondary battery. Further, examples of the capacitor include an electric double layer capacitor.

It is to be noted that the electrode material for an electrical storage device is obtained by shaping the carbon material according to the present invention, including therein a binder resin and a solvent, if necessary, thereby allowing for use as an electrode for an electrical storage device.

The electrode material for an electrical storage device can be shaped, for example, by forming a sheet with a rolling roller and then drying the sheet. Alternatively, a current collector may be coated with a coating liquid composed of the carbon material according to the present invention, a binder resin, and a solvent, and then subjected to drying.

As the binder resin, for example, polybutyrals, polytetrafluoroethylene, styrene-butadiene rubbers, polyimide resins, acrylic resins, fluorine-based polymers such as polyvinylidene fluorides, and water-soluble carboxymethyl celluloses can be used. Preferably, polytetrafluoroethylene can be used. When polytetrafluoroethylene is used, the dispersibility and the heat resistance can be further improved.

The compounding proportion of the binder resin preferably falls within the range of 0.3 parts by weight to 40 parts by weight, more preferably within the range of 0.3 parts by weight to 15 parts by weight with respect to 100 parts by weight of the carbon material. The compounding proportion of the binder resin falls within the range mentioned above, thereby the capacitance of the electrical storage device to be further increased.

Further, as the solvent, ethanol, N-methylpyrrolidone (NMP), water, or the like can be used.

When the electrical storage device is used for a capacitor, an aqueous system or a non-aqueous (organic) system may be used as an electrolytic solution for the capacitor.

Examples of the aqueous electrolytic solution include an electrolytic solution in which water is used as a solvent and a sulfuric acid, a potassium hydroxide, or the like is used as an electrolyte.

In contrast, as the non-aqueous electrolytic solution, for example, an electrolytic solution including the following solvent, electrolyte, or ionic liquid can be used. Specific examples of the solvent include acetonitrile, propylene carbonate (PC), ethylene carbonate (EC), dimethyl carbonate (DMC), diethyl carbonate (DEC), or acrylonitrile (AN).

In addition, examples of the electrolyte include a lithium hexafluorophosphate ($LiPF_6$), a lithium tetrafluoroborate ($LiBF_4$), a tetraethylammonium tetrafluoroborate ($TEABF_4$), and a triethylmethylammonium tetrafluoroborate ($TEMABF_4$).

Furthermore, as the ionic liquid, for example, an ionic liquid with the following cation and anion can be used. Examples of the cation include an imidazolium ion, a pyridinium ion, an ammonium ion, and a phosphonium ion. Examples of the anion include a tetrafluoroborate ion ($BF_4^-$), a hexafluoroborate ion ($BF_6^-$), a tetrachloroaluminum ion ($AlCl_4^-$), a hexafluorotantalum ion ($TaF_6^-$), and a tris(trifluoromethanesulfonyl)methane ion ($C(CF_3SO_2)_3^-$). When the ionic liquid is used, the drive voltage can be further improved in the electrical storage device. More specifically, the energy density can be further improved.

Next, the present invention will be clarified by providing specific examples and comparative examples of the present invention. It is to be noted that the present invention is not to be considered limited to the examples below.

(Example 1)

A raw material composition was prepared by mixing 1 g of expanded graphite (from Toyo Tanso Co., Ltd., trade name "PF powder 8", BET specific surface area = 22 $m^2$/g), 200 g of a polyethylene glycol (PEG, from Wako Pure Chemical Industries, Ltd.), 4 g of a terephthalic acid, and 80 g of water as a solvent. The prepared raw material composition was irradiated with ultrasonic waves at 100 W and an oscillation frequency: 28 kHz for 6 hours with the use of an ultrasonic processor (from HONDA ELECTRONICS CO., LTD.). The ultrasonic irradiation caused the polyethylene glycol to adsorb on the expanded graphite. In this manner, a composition with the polyethylene glycol adsorbed on the expanded graphite was prepared.

After the above ultrasonic irradiation, the temperature was maintained at 150°C for 3 hours. Thus, in the composition with the polyethylene glycol adsorbed on the expanded graphite, a reaction product (resin) of the polyethylene glycol and the terephthalic acid was obtained while water was dried. Next, the dried composition was subjected to a heating step of keeping the composition at a temperature of 370°C for 2 hours under a nitrogen atmosphere. Thus, the polyethylene glycol was thermally decomposed to obtain partially exfoliated graphite. The reaction product (resin) of the polyethylene glycol and the terephthalic acid partially remains in the partially exfoliated graphite.

Next, 0.5 g of the partially exfoliated graphite obtained was immersed in a potassium carbonate aqueous solution in which 1.0 g of a potassium carbonate as an activator was dissolved in 5.0 g of water. Thus, the ratio by weight of the potassium carbonate to the partially exfoliated graphite was adjusted to 2 times (= impregnation ratio of 2).

Next, the partially exfoliated graphite immersed in the potassium carbonate was subjected to an activation treatment by holding the graphite at a temperature (carbonization/activation temperature) of 800°C for 60 minutes under a nitrogen atmosphere. Finally, a carbon material was obtained by washing with hot water to neutrality.

The content of the resin (the reaction product of the polyethylene glycol and the terephthalic acid) in the obtained carbon material was confirmed in the following manner with the use of a differential thermogravimetric simultaneous measurement device (manufactured by Hitachi High-Tech Corporation, product number "STA7300"). It is to be noted that the content of the resin mentioned above is considered as the content of the resin and/or the resin carbide, and the same is considered to apply to the following examples.

About 2 mg of the carbon material was weighed in a platinum pan. The sample was subjected to measurement from 30°C to 1000°C at a rate of temperature increase of 10°C/min under the air atmosphere. From the differential thermal analysis results obtained by the measurement, the combustion temperatures of the resin and partially exfoliated graphite were separated, and from the accompanying thermogravimetric change, the amount of the resin (% by weight) with respect to the whole carbon material was calculated. In Example 1, the amount of the resin was 83.6% by weight.

(Example 2)

A carbon material was obtained in the same manner as in Example 1 except for using 200 g of an aromatic polyester polyol (from Kawasaki Kasei Chemicals Ltd., trade name "RLK087") instead of the polyethylene glycol (PEG) and the terephthalic acid.

(Example 3)

A carbon material was obtained in the same manner as in Example 1 except for using 200 g of an aromatic polyester polyol (from Kawasaki Kasei Chemicals Ltd., trade name "RLK035") instead of the polyethylene glycol (PEG) and the terephthalic acid.

(Example 4)

A carbon material was obtained in the same manner as in Example 1 except for using, instead of the polyethylene glycol (PEG) and the terephthalic acid, 200 g of a resin obtained by mixing the polyethylene glycol (PEG) and an aromatic polyester polyol (from Kawasaki Kasei Chemicals Ltd., trade name "RFK509") at a ratio by weight of 2 : 1.

(Example 5)

Partially exfoliated graphite obtained in the same manner as in Example 2 was obtained except for using a raw material composition obtained by mixing 200 g of an aromatic polyester polyol (from Kawasaki Kasei Chemicals Ltd., trade name "RLK087") with 1 g of expanded graphite (from Toyo Tanso Co., Ltd., trade name "PF powder 8", BET specific surface area = 22 $m^2$/g). In a potassium carbonate aqueous solution in which 0.1 g of a potassium carbonate as an activator was dissolved in 5.0 g of water, 0.5 g of the partially exfoliated graphite obtained was immersed. Thus, the ratio by weight of the potassium carbonate to the partially exfoliated graphite was adjusted to 0.2 times (= impregnation ratio of 0.2).

Next, the partially exfoliated graphite immersed in the potassium carbonate was subjected to an activation treatment by holding the graphite at a temperature (carbonization/activation temperature) of 900°C for 80 minutes under a nitrogen atmosphere. In the same manner as in Example 1 in other respects, a carbon material was obtained.

(Example 6)

A carbon material was obtained in the same manner as in Example 1 except for using, instead of the polyethylene glycol (PEG) and the terephthalic acid, 200 g of a resin obtained by mixing the polyethylene glycol (PEG) and an aromatic polyester polyol (from Kawasaki Kasei Chemicals Ltd., trade name "RFK556") at a ratio by weight of 1 : 1.

(Example 7)

A carbon material was obtained in the same manner as in Example 1 except for using, instead of the polyethylene glycol (PEG) and the terephthalic acid, 200 g of a resin obtained by mixing the polyethylene glycol (PEG) and an aromatic polyester polyol (from Kawasaki Kasei Chemicals Ltd., trade name "RDK121") at a ratio by weight of 2 : 1.

(Comparative Example 1)

As the carbon material, activated carbon without any graphene laminated structure (from Kuraray Chemical Co., Ltd., trade name "YP50F") was used as it was.

(Comparative Example 2)

As the carbon material, porous carbon without any graphene laminated structure (from Toyo Carbon Co., Ltd., trade name "MH") was used as it was.

(Comparative Example 3)

As the carbon material, graphene without any graphene laminated structure (from XG Sciences, Inc., trade name "C-1000") was used as it was.

(Comparative Example 4)

Partially exfoliated graphite obtained by performing a heating step of keeping at a temperature of 420°C for 30 minutes, instead of the heating step of mixing the potassium carbonate and then keeping at the temperature of 800°C for 60 minutes in Example 1, was used as it was as a carbon material without being subjected to any activation treatment.

(Comparative Example 5)

A carbon material was obtained in the same manner as in Example 1 except for using no terephthalic acid.

(Comparative Example 6)

Instead of the polyethylene glycol (PEG) and the terephthalic acid in Example 1, an aromatic polyester polyol (from Kawasaki Kasei Chemicals Ltd., trade name "RFK509") was used. Furthermore, the partially exfoliated graphite immersed in the potassium carbonate was subjected to an activation treatment by holding the graphite at a temperature (carbonization/activation temperature) of 800°C for 240 minutes under a nitrogen atmosphere. In the same manner as in Example 1 in other respects, a carbon material was obtained. When the holding time in the activation treatment was extremely long, the reaction proceeded excessively, thereby significantly increasing mesopores, and decreasing the powder density.

[Evaluation]

The carbon materials according to Examples 1 to 7 and Comparative Examples 1 to 6 were evaluated as follows. The results are shown in Table 1 below.

BET specific surface area;

The BET specific surface areas of the carbon materials obtained in Examples 1 to 7 and Comparative Examples 1 to 6 were calculated as follows. Adsorption isotherms with the use of a high-precision gas adsorption measurement device (from MicrotracBEL Corp., product number "BELSORP-MAX", nitrogen gas, $1.0 \times 10^{-6}$ < relative pressure $P/P_0$ < 0.99). The BET specific surface areas were calculated through the BET method with analysis software (from MicrotracBEL Corp., software name "BELMaster") adopted for the adsorption isotherms.

Evaluation of micropores and mesopores;

The volume of the micropores of the carbon material was calculated in accordance with the MP method with analysis software (from MicrotracBEL Corp., software name "BELMaster") adopted for adsorption isotherms obtained in the same manner as mentioned above.

The volume of the mesopores of the carbon material was calculated in accordance with the BJH method with analysis software (from MicrotracBEL Corp., software name "BELMaster") adopted for adsorption isotherms obtained in the same manner as mentioned above.

Further, X/Y was determined, where the volume of the micropores was expressed by X (mL/g), and the volume of the mesopores was expressed by Y (mL/g).

Evaluation of powder density;

The powder density of the carbon material was evaluated with the use of a powder resistance measurement device (manufactured by Mitsubishi Chemical Analytech Co., Ltd., product number "MCP-T700/PD51"). Specifically, 0.1 g of the carbon material was weighed, put in a container with a cross-sectional area of 3.14 $cm^2$, compressed by applying pressure up to 16 kN with a hydraulic pump, while the thickness is measured. The density calculated in that case was regarded as the powder density. In addition, the product of the BET specific surface area ($m^2/g$) and the powder density (g/cc) was calculated.

Evaluation of capacitance;

The capacitance was measured for electric double layer capacitors obtained with the use of the carbon materials obtained in Examples 1 to 7 and Comparative Examples 1 to 5.

Specifically, the carbon materials according to Examples 1 to 7 and Comparative Examples 1 to 6 and PTFE (from Du Pont-Mitsui Fluorochemicals Co., Ltd.) as a binder were kneaded at a ratio by weight of 9 : 1, and formed into films with the use of a rolling roller, thereby providing capacitor electrodes. It is to be noted that the obtained electrode film thicknesses were each adjusted to 90 $\mu$m to 150 $\mu$m.

The obtained capacitor electrodes were subjected to vacuum drying at 110°C for 11 hours, and then subjected to punching into two circles of 1 cm in diameter, and the circles were subjected to weight measurement. Next, an electric double layer capacitor was prepared by assembling a cell with two capacitor electrodes as a negative electrode and a positive electrode with a separator interposed therebetween, and then injecting 1.2 ml of an electrolytic solution. These operations were performed in an environment with a dew point of -70°C or lower.

For measuring the capacitance of the electric double layer capacitor, 3 cycles of repeated charge/discharge characteristic measurement between 0 V and 2.5 V was made with the control current value set to 500 mA/g (a current of 500 mA flowing per 1 g of the electrode weight). Then, the obtained measurement results were calculated with the use of the following formula (1), with the calculation range set to 1 V to 2 V.

$$C = I/(\Delta V/\Delta t)... \quad Formula\ (1)$$

(In the formula (1), C represents capacitance with a unit of F, and I represents a discharge current value with a unit of A. $\Delta V$ represents the difference between a starting voltage value and a cutoff voltage value in the calculation range, with a unit of V, which is 1 herein because of the range from 2 V to 1 V. $\Delta t$ represents the time required for discharge from a starting voltage value to a cutoff voltage value, with a unit of seconds.)

In addition, as capacitance per volume, the capacitance $C_V$ per volume was calculated with the use of the following formula (2), after measuring the thickness and weight m of the electrode subjected to punching into a circle of 10 mm$\varphi$ in diameter and calculating the electrode density d in this case.

$$C_V = C/m \times d... \quad Formula\ (2)$$

Further, the capacitance per volume was judged in accordance with the following criteria.

[Judging criteria for capacitance]

Excellent: 20 F/cc $\leq C_V$
Good: 12.5 F/cc $\leq C_V$ < 20 F/cc
Poor: $C_V$ < 12.5 F/cc
The results are shown in Table 1 below.

[Table 1]

| | Graphene Laminated Structure | Resin | Activator | Impregnation Ratio [times] | Impregnation Method | Firing Temperature [°C] | Holding Time [minutes] | BET Specific Surface Area [m²/g] | Micropore Volume [mL/g] (X) | Mesopore Volume [ml/g] (Y) | Amount of Resin (% by weight) | X/Y | Powder Density (g/cc) | Capacitance (F/cc) | BET x Power Density |
|---|---|---|---|---|---|---|---|---|---|---|---|---|---|---|---|
| | | | | | | | | | Pore Volume | | | | | | |
| Example 1 | Yes | PEG + Terephthalic Acid | $K_2CO_3$ | 2 | Physical Mixing | 800 | 60 | 1414 | 0.59 | 0.22 | 83.6 | 2.69 | 0.66 | Excellent | 933 |
| Example 2 | Yes | Aromatic Polyester Polyol | $K_2CO_3$ | 2 | Physical Mixing | 800 | 60 | 1025 | 0.40 | 0.49 | 97.9 | 0.83 | 0.57 | Good | 584 |
| Example 3 | Yes | Aromatic Polyester Polyol | $K_2CO_3$ | 2 | Physical Mixing | 800 | 60 | 1220 | 0.46 | 0.45 | 94.9 | 1.02 | 0,51 | Good | 622 |
| Example 4 | Yes | PEG + Aromatic Polyester Polyol | $K_2CO_3$ | 2 | Physical Mixing | 800 | 60 | 1173 | 0.43 | 1.19 | 98.8 | 0.36 | 0.57 | Excellent | 669 |
| Example 5 | Yes | Aromatic Polyester Polyol | $K_2CO_3$ | 0,2 | Physical Mixing | 900 | 80 | 1001 | 0.39 | 0.15 | 70.3 | 2.60 | 0,62 | Good | 621 |
| Example 6 | Yes | PEG + Aromatic Polyester Polyol | $K_2CO_3$ | 2 | Physical Mixing | 800 | 60 | 919 | 0.34 | 1.03 | 89.8 | 0.33 | 0.63 | Good | 579 |
| Example 7 | Yes | PEG + Aromatic Polyester Polyol | $K_2CO_3$ | 2 | Physical Mixing | 800 | 60 | 1148 | 0.47 | 0.30 | 91.3 | 1.57 | 0.52 | Good | 597 |
| Comparative Example 1 | No | - | - | - | - | - | - | 1702 | 0.73 | 0.16 | 0.0 | 4.48 | 0.48 | Poor | 817 |
| Comparative Example 2 | No | - | - | - | - | - | - | 1591 | 0.95 | 1.86 | 0.0 | 0.51 | 0.45 | Poor | 716 |

EP 3 845 489 A1

12

(continued)

| | Graphene Laminated Structure | Resin | Activator | Impregnation Ratio [times] | Impregnation Method | Firing Temperature [°C] | Holding Time [minutes] | BET Specific Surface Area [m²/g] | Pore Volume | | Amount of Resin (% by weight) | X/Y | Powder Density (g/cc) | Capacitance (F/cc) | BET x Power Density |
|---|---|---|---|---|---|---|---|---|---|---|---|---|---|---|---|
| | | | | | | | | | Micropore Volume [mL/g] (X) | Mesopore Volume [ml/g] (Y) | | | | | |
| Comparative Example 3 | No | - | - | - | - | - | - | 989 | 0.14 | 2.66 | 0.0 | 0.05 | 0.55 | Poor | 544 |
| Comparative Example 4 | Yes | PEG | - | - | - | 420 | 30 | 96 | 0.04 | 0.14 | 12.0 | 0.29 | 1.46 | Poor | 140 |
| Comparative Example 5 | Yes | PEG | K₂CO₃ | 2 | Physical Mixing | 800 | 60 | 1500 | 0.60 | 0.15 | 92.0 | 4.07 | 0.47 | Poor | 705 |
| Comparative Example 6 | Yes | Aromatic Polyester Polyol | K₂CO₃ | 2 | Physical Mixing | 800 | 240 | 1075 | 0.32 | 2.35 | 99.0 | 0.14 | 0.38 | Poor | 408 |

EP 3 845 489 A1

13

**Claims**

1. A carbon material comprising a carbon material that has a graphene laminated structure,
   the carbon material having a BET specific surface of 240 m$^2$/g or more, and
   having a powder density of 0.5 g/cc or more when 0.1 g of the carbon material is put in a container with a cross-sectional area of 3.14 cm$^2$ and compressed at a pressure of 16 kN.

2. The carbon material according to claim 1, wherein the carbon material has a BET specific surface area of 450 m$^2$/g or more.

3. The carbon material according to claim 1 or 2, wherein the carbon material has a mesopore volume of 0.04 mL/g or more measured in accordance with a BJH method.

4. The carbon material according to any one of claims 1 to 3, wherein the carbon material has a micropore volume of 0.20 mL/g or more measured in accordance with an MP method.

5. The carbon material according to any one of claims 1 to 4, wherein X/Y meets 0.3 < X/Y < 4, where the micropore volume of the carbon material, measured in accordance with the MP method, is expressed by X mL/g and the mesopore volume of the carbon material, measured in accordance with the BJH method, is expressed by Y mL/g.

6. The carbon material according to any one of claims 1 to 5, wherein the carbon material that has the graphene laminated structure is graphite or exfoliated graphite.

7. The carbon material according to claim 6, wherein the graphite or the exfoliated graphite is partially exfoliated graphite in which graphite is partially exfoliated.

8. The carbon material according to any one of claims 1 to 7, wherein the carbon material further comprises a resin carbide.

9. The carbon material according to claim 8, wherein a content of the resin carbide in the carbon material is 1% by weight or more and 99.9% by weight or less.

10. The carbon material according to claim 8 or 9, wherein the resin carbide contains an aromatic ring.

11. A method for producing a carbon material according to any one of claims 1 to 10, the method comprising:

    a mixing step of mixing graphite or primary exfoliated graphite with a resin;
    a step of, in the mixing step or after the mixing step, further mixing an activator to obtain a mixture; and
    a step of subjecting the mixture to an activation treatment.

12. The method for producing a carbon material according to claim 11, wherein the composition comprising the graphite or the primary exfoliated graphite and the resin is heated at a temperature of 200°C to 500°C in the mixing step.

13. The method for producing a carbon material according to claim 11 or 12, wherein the mixture comprising the graphite or the primary exfoliated graphite, the resin, and the activator is heated at a temperature of 200°C to 500°C in the mixing step.

14. The method for producing a carbon material according to any one of claims 11 to 13, wherein the resin is a resin having an aromatic ring.

15. The method for producing a carbon material according to claim 14, wherein the resin having an aromatic ring contains an aromatic polyester resin.

16. The method for producing a carbon material according to claim 14 or 15, wherein the resin having an aromatic ring is a reaction product of a compound having a hydroxyl group and a compound having a carboxyl group.

17. The method for producing a carbon material according to claim 16, wherein the compound having a hydroxyl group is a polyhydric alcohol.

EP 3 845 489 A1

**18.** The method for producing a carbon material according to claim 16 or 17, wherein the compound having carboxyl is an aromatic polycarboxylic acid derivative.

**19.** An electrode material for an electrical storage device, the electrode material containing the carbon material according to any one of claims 1 to 10.

**20.** An electrical storage device comprising an electrode made from the electrode material for an electrical storage device according to claim 19.

15

## INTERNATIONAL SEARCH REPORT

| International application No. |
| --- |
| PCT/JP2019/033241 |

A.  CLASSIFICATION OF SUBJECT MATTER

Int.Cl.  C01B32/342(2017.01)i, C01B32/182(2017.01)i, C01B32/21(2017.01)i,
         H01G11/36(2013.01)i, H01M4/587(2010.01)i, H01M4/62(2006.01)i

According to International Patent Classification (IPC) or to both national classification and IPC

B.  FIELDS SEARCHED

Minimum documentation searched (classification system followed by classification symbols)
Int.Cl.  C01B32/342, C01B32/182, C01B32/21, H01G11/36, H01M4/587, H01M4/62

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
JSTPlus/JST7580/JSTChina (JDreamIII)

C.  DOCUMENTS CONSIDERED TO BE RELEVANT

| Category* | Citation of document, with indication, where appropriate, of the relevant passages | Relevant to claim No. |
| --- | --- | --- |
| X<br>A | JP 2014-196206 A (NEC CORP.) 16 October 2014, claims 1, 7, paragraphs [0001], [0026] (Family: none) | 1, 2, 6, 7, 19, 20<br>3-5, 8-18 |
| X | JP 2018-41710 A (SEKISUI CHEMICAL CO., LTD.) 15 March 2018, claim 1, paragraphs [0056], [0067], [0113], [0115] (Family: none) | 1, 2, 6-10, 19, 20 |
| X | US 2017/0221643 A1 (ZHAMU, Aruna) 03 August 2017, claim 1, paragraph [0001] & WO 2017/136114 A1 & CN 108701823 A | 1, 2, 6, 19, 20 |

☒ Further documents are listed in the continuation of Box C.       ☐ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 25 October 2019 (25.10.2019) | 05 November 2019 (05.11.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

## INTERNATIONAL SEARCH REPORT

International application No.

PCT/JP2019/033241

C (Continuation). DOCUMENTS CONSIDERED TO BE RELEVANT

| Category* | Citation of document, with indication, where appropriate, of the relevant passages | Relevant to claim No. |
|---|---|---|
| A | US 2005/0231892 A1 (HARVEY, Troy A.) 20 October 2005, paragraphs [0003], [0030]-[0032] (Family: none) | 1-20 |
| P, X | WO 2018/230080 A1 (SEKISUI CHEMICAL CO., LTD.) 20 December 2018, claims 9-13 & TW 201904867 A | 11-13, 19, 20 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005347517 A
- JP 2015098758 A
- WO 2014034156 A